# DEMANDE DE BREVET EUROPEEN

(11) **EP 0 692 891 A1**
(43) Date de publication de la demande: **17.01.1996**
(21) Numéro de dépôt: 95201786.1
(22) Date de dépôt: 30.06.1995
(51) Int. Cl.: H04L 12/46

(54) **Système d'interconnexion de réseaux locaux utilisant un protocole de routage de type "routage depuis la source" et équipement d'interconnexion destiné à être utilisé dans un tel système**

(30) Priorité: 12.07.1994 FR 9408654
(71) Demandeur: T.R.T. TELECOMMUNICATIONS RADIOELECTRIQUES ET TELEPHONIQUES, F-75013 Paris (FR); Philips Electronics N.V., NL-5621 BA Eindhoven (NL)
(72) Inventeur: Behaghel, Denis, F-75008 Paris (FR); Burgain, Alain, F-75008 Paris (FR); Ould Ali, Abdelhamid, F-75008 Paris (FR)
(74) Mandataire: Chaffraix, Jean

(57) **Abrégé**

Un système selon l'invention permet d'interconnecter des réseaux locaux distants utilisant un protocole de routage "depuis la source" au travers d'un réseau longue distance.

Il comporte des moyens pour:
- éviter la diffusion systématique de trames d'exploration sur le réseau longue distance,
- mettre en oeuvre un apprentissage, par lesdits équipements, des réseaux locaux sur lesquels les stations distantes sont connectées,
- doubler le nombre maximum de réseaux interconnectés entre deux extrémités du système,
- autoriser la connexion directe d'une station sur le réseau longue distance.

Applications: Interconnexion de réseaux de type anneau à jeton notamment.

## Description

La présente invention concerne un système d'interconnexion de réseaux locaux utilisant un protocole de routage de type "routage depuis la source", au travers d'un réseau longue distance par l'intermédiaire d'équipements d'interconnexion.

Elle a d'importantes applications dans le domaine de l'interconnexion de réseaux locaux distants, notamment de réseaux locaux de type anneau à jeton.

Un tel protocole est décrit dans l'ouvrage de Radia Perlman intitulé "Interconnections: Bridges and Routers" (chapitre 4, paragraphe 1) et publié en Mai 1992 par "Addison-Wesley publishing company".

Succinctement, le principe de base de ce type de protocole est le suivant: la route que doit suivre une trame pour atteindre une station destinataire est insérée dans l'entête de cette trame par la station source. Préalablement à toute communication avec une station distante, la station source doit donc découvrir la route à utiliser. Pour cela, elle émet à destination de la station distante une trame spécifique dite trame d'exploration qui comporte un champ de routage (couramment noté RIF de l'anglais Routing Information Field). Cette trame est diffusée sur l'ensemble du système de façon à atteindre la totalité des réseaux locaux interconnectés, et son champ de routage est mis à jour au fur et à mesure de façon à indiquer, dans chaque cas, la route suivie.

Seule la station destinataire émet une réponse vers la station source en indiquant dans son champ de routage la route qu'elle aura préalablement sélectionnée.

Lorsque la station source reçoit cette réponse, elle mémorise ladite route de façon à pouvoir l'insérer dans l'entête des futures trames à destination de cette station distante.

Cette méthode présente l'inconvénient majeur d'entraîner une diffusion systématique des trames d'exploration sur le réseau longue distance, ce qui a des conséquences sur le réseau proprement dit en terme de puissance de commutation, et sur l'usager en termes de coût.

Un but de la présente invention est de proposer un système d'interconnexion de réseaux locaux remédiant à ces inconvénients.

Pour cela, un système d'interconnexion de réseaux locaux selon l'invention et tel que décrit dans le paragraphe introductif est caractérisé en ce que chacun desdits équipements d' interconnexion:
- contient une mémoire, dite mémoire de configuration, destinée à comporter, au moins, pour chaque destination au delà du réseau longue distance, l'adresse sur le réseau longue distance de l'équipement d'interconnexion de raccordement de ladite destination, et comporte:
- des moyens d'apprentissage de ladite adresse,
- des moyens de recherche dans ladite mémoire de la destination des trames reçues,
- et des moyens pour établir, lorsque ladite destination est connue, une connexion vers ledit équipement d'interconnexion de raccordement.

On évite ainsi la diffusion systématique des trames d'exploration sur le réseau longue distance à chaque établissement de session entre deux stations distantes.

Dans un autre mode de réalisation la mémoire de configuration de chaque équipement d'interconnexion est également destinée à comporter la route à suivre pour atteindre chacune des dites destinations à partir de cet équipement, et lesdits équipements d'interconnexion comportent:
- des moyens de réception d'une trame d'exploration,
- des moyens pour rechercher la destination de cette trame dans la mémoire de configuration,
- et des moyens pour répondre directement à la trame d'exploration en indiquant la route à suivre, lorsque cette destination y figure.

Ainsi, lors d'établissement de sessions futures, il n'est plus nécessaire de transmettre la trame d'exploration à la station destinataire.

Dans un autre mode de réalisation particulièrement avantageux, les adresses des stations desdits réseaux locaux sont structurées de façon à comporter un numéro du réseau, suivi d'un numéro de la station sur ce réseau, et la destination enregistrée dans ladite mémoire de configuration est le numéro du réseau sur lequel se situe la station de destination.

Ainsi, l'apprentissage des adresses par les équipements d'interconnexion consiste à apprendre des réseaux entiers et non des stations une à une. Ceci présente l'avantage de diminuer la taille de la mémoire de configuration nécessaire dans chaque équipement d'interconnexion, d'augmenter sensiblement la vitesse d'apprentissage de ces équipements, et enfin de pouvoir déplacer une station sur un réseau local de façon totalement transparente pour l'ensemble du système.

Dans un autre mode de réalisation particulièrement avantageux, un système d'interconnexion selon l'invention comporte des moyens pour que la partie de la route située au delà du réseau longue distance soit stockée, lors de l'établissement d'une session entre une station source et une station destinataire, dans une mémoire de l'équipement d'interconnexion de raccordement de ladite station destinataire.

Ainsi seule la partie locale de la route est utile pour la station source afin d'acheminer les trames jusqu'au réseau longue distance. Or la taille du champ de routage limite à une valeur donnée le nombre de réseaux qui peuvent séparer deux stations distantes dans un système d'interconnexion tel que décrit ci-dessus. Dans ce mode de réalisation, c'est donc le nombre de réseaux séparant chacune des deux stations du réseau longue distance qui est limité à ladite valeur. Autrement dit, le nombre maximum de réseaux interconnectés est doublé.

Il est important de noter que de tels moyens de stockage, lors de l'établissement d'une session entre une station source et une station destinataire, de la partie de la route située au delà du réseau longue distance, dans une mémoire de l'équipement d'interconnexion de raccordement de ladite station destinataire, peuvent également être mis en oeuvre dans un système d'interconnexion de réseaux locaux utilisant un protocole de routage "depuis la source", indépendamment des autres caractéristiques de l'invention.

Dans un autre mode de réalisation, un système d'interconnexion selon l'invention comporte au moins une station connectée directement sur le réseau longue distance, une adresse virtuelle de même format que celui des stations desdits réseaux locaux étant attribuée à ladite station, et chacun des équipements d' interconnexion du réseau longue distance comportant une table de correspondance entre ladite adresse virtuelle et l'adresse de ladite station sur le réseau longue distance.

Ces moyens de connexion directe d'une station au réseau longue distance (attribution d'une adresse virtuelle à la dite station et d'une table de correspondance à chacun des équipements d'interconnexion du réseau longue distance) peuvent également être mis en oeuvre dans un système d'interconnexion de réseaux locaux utilisant un protocole de routage "depuis la source", indépendamment des autres caractéristiques de l'invention.

L'invention concerne également un équipement d'interconnexion, qui comporte des moyens lui permettant d'être utilisé dans un système d'interconnexion de réseaux tel que décrit ci-dessus.

D'autres particularités, détails et avantages de la présente invention apparaîtront dans la description qui va suivre en regard des dessins annexés qui sont donnés à titre d'exemple non limitatif et dans lesquels:
- la figure 1 représente schématiquement un exemple de système d'interconnexion selon l'invention,
- la figure 2 représente partiellement une trame véhiculée sur des réseaux de type anneaux à jeton conformément à la norme IEEE 802.5,
- la figure 3 représente schématiquement le fonctionnement d'un système d'interconnexion selon l'invention en ce qui concerne la communication entre deux stations distantes connectée chacune sur un réseau local de type anneau à jeton,
- la figure 4 représente schématiquement le fonctionnement d'un système d'interconnexion selon l'invention en ce qui concerne la communication entre une première station connectée sur un réseau local de type anneau à jeton et une seconde station connectée directement sur le réseau longue distance,
- la figure 5 représente un exemple d'organigramme de fonctionnement d'un équipement d'interconnexion selon l'invention,
- la figure 6 représente un équipement d'interconnexion selon l'invention.

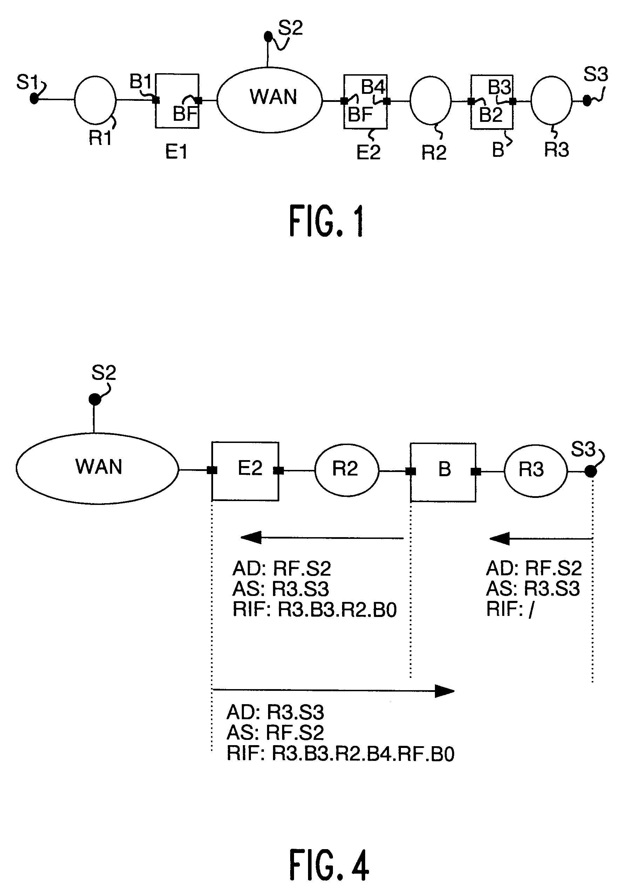

D'après la figure 1, un système d'interconnexion selon l'invention comporte une pluralité de réseaux locaux notés R1, R2 et R3, une station S1 étant connectée sur le réseau local R1 et une station S3 sur le réseau local R3. Les réseaux locaux R1 et R2 sont chacun connectés à un réseau longue distance WAN par l'intermédiaire d'un équipement d'interconnexion E1 et E2 respectivement. Le réseau local R3 est connecté au réseau local R2 par l'intermédiaire d'un pont B. Une station S2, enfin, est connectée directement sur le réseau longue distance WAN.

Dans cet exemple de réalisation, les réseaux locaux sont des réseaux de type anneaux à jeton, et le réseau longue distance est un réseau X25 dont le format d'adressage est défini par la recommandation X121 du CCITT. L'invention n'est toutefois pas limitée à ce type de réseaux, et pourrait également s'appliquer à des réseaux de type réseau commuté ou réseau à intégration de services par exemple.

Les réseaux locaux de type anneau à jeton utilisent un protocole de "routage depuis la source" tel qu'il a été succinctement exposé en introduction.

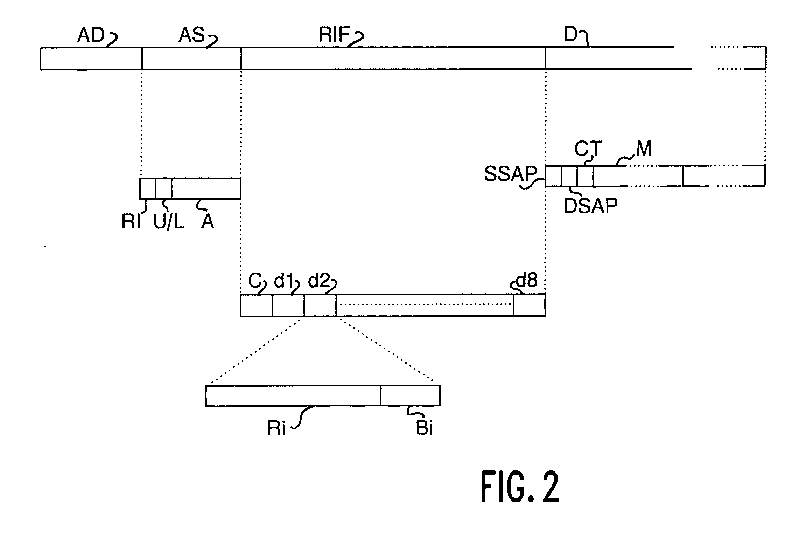

La figure 2 donne une représentation schématique du format d'une trame véhiculée sur les réseaux de type anneau à jeton, conformément à la norme 802.5 de l'IEEE.

D'après la figure 2 une telle trame comporte:
- un champ AD de 6 octets contenant l'adresse de destination de la trame,
- un champ AS de 6 octets contenant l'adresse source de la trame,
- un champ RIF de routage, optionnel, de 18 octets maximum,
- et un champ D de données, d'une longueur variable.
Une telle trame comporte également d'autres champs (par exemple un champ de délimitation de début et de fin de trame, un champ de contrôle, un champ d'accès...) qui ne sont pas utiles à la suite de la description et ne sont donc pas représentés ici. Tout détail complémentaire à cet égard pourra être trouvé dans la norme IEEE 802.5 par exemple.

De façon plus détaillée le champ AS de cette trame comporte:
- un champ RI d'un bit indiquant si la trame comporte un champ de routage RIF,
- un champ U/L indiquant si l'adresse est en format local ou en format universel (une adresse universelle est une adresse unique attribuée à l'équipement lors de sa fabrication et enregistrée dans sa mémoire ROM, tandis qu'une adresse locale est une adresse administrée localement),
- un champ A de 46 bits contenant l'adresse proprement dite.

De même le champ RIF de cette trame comporte:
- un champ C de contrôle de 2 octets, qui contient notamment 3 bits indiquant le mode de diffusion de la trame (pas de diffusion dans le cas ou le champ RIF contient une route spécifique pour la transmission de la trame au travers du système, diffusion générale de la trame sur l'ensemble du système vers la station de destination qui en recevra donc de multiples copies, ou diffusion simple de la trame de telle sorte qu'une unique trame arrive à la station de destination), suivis de 5 bits pour coder la longueur du champ RIF, et d'un bit pour indiquer le sens de lecture de ce champ (de la gauche vers la droite ou de la droite vers la gauche),
- une succession d'au plus 8 champs di (i= 1 à 8) de désignation de la route, d'une longueur de 2 octets chacun. Chacun de ces champs di est composé d'un numéro de réseau Ri codé sur les 12 premiers bits, suivi d'un numéro d'équipement Bi codé sur les 4 derniers bits.

Chaque pont et équipement d'interconnexion doit donc être configuré avec un numéro de réseau et un numéro d'équipement pour chacun de ses ports. Chaque route pourra ainsi être écrite sous forme d'une séquence alternée de numéros de réseau et de numéro d'équipements.

Dans la suite de l'exposé les notations choisies sont les suivantes: les numéros de réseau sont respectivement notés R1, R2 et R3 pour les trois réseaux locaux, et un numéro de réseau virtuel RF est attribué au réseau longue distance. De plus, les numéros B1 et BF sont respectivement attribués à l'équipement E1 pour ses ports vers les réseaux R1 et RF; les numéros BF et B4 sont respectivement attribués à l'équipement E2 pour ses ports vers les réseaux RF et R2; enfin les numéros B2 et B3 sont respectivement attribués au pont B pour ses ports vers les réseaux R2 et R3.

D'après l'invention, un adressage local est utilisé pour l'ensemble du système, le plan d'adressage choisi consistant à structurer les adresses des stations de la façon suivante: numéro du réseau local sur lequel la station est connectée, codé sur 12 bits, suivi d'un numéro de station codé sur 2 octets. De plus, on choisira avantageusement comme numéro de réseau celui qui a été configuré dans les ponts et les équipements d'interconnexion pour les besoins du routage. Ainsi, les adresses des stations S1 et S3 s'écrivent respectivement R1.S1 et R3.S3 où S1 et S3 représentent un mot binaire de 2 octets.

Enfin, le champ de données de la trame représentée sur la figure 2 véhicule les trames de la couche liaison de données qui comportent elles-même:
- un premier champ SSAP (de l'anglais Source Service Access Point), codé sur 1 octet, indiquant l'adresse du point d'accès au niveau de l'interface entre la couche réseau et la couche liaison de données, en émission.
- un second champ DSAP (de l'anglais Destination Service Access Point), codé sur 1 octet, indiquant l'adresse du point d'accès au niveau de l'interface entre la couche liaison de données et la couche réseau, en réception.
- un troisième champ CT dit champ de contrôle codé sur un octet, qui indique le type de la trame; pour les trames d'exploration, il s'agit d'une trame TEST.
- un quatrième champ M codé sur 27 octets qui contient les informations proprement dites, c'est-à-dire dans ce cas un message indiquant qu'il s'agit d'une trame d'exploration.

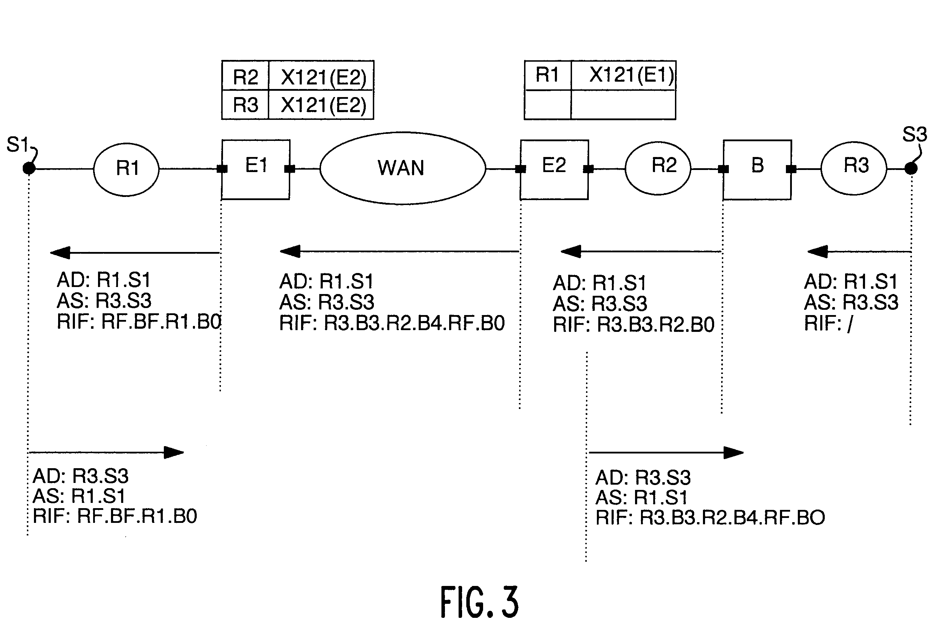

La figure 3 décrit le fonctionnement d'un système d'interconnexion selon l'invention lors d'une communication entre les deux stations S1 et S3.

Lorsque la station S3 veut établir une session avec la station S1, elle commence par émettre une trame d'exploration à destination de S1. Le champ AS de cette trame contient l'adresse R3.S3 de la station S3, son champ AD contient l'adresse R1.S1 de la station S1 (supposée connue), et le champ C du champ RIF indique que la trame doit être diffusée (diffusion générale ou diffusion simple).

Lorsque cette trame arrive au pont B, celui-ci complète le champ RIF en indiquant la route parcourue c'est-à-dire R3.B3.R2.BO (la trame est tout d'abord passée par l'anneau R3, est sortie de R3 en passant par le port B3 du pont B, est retransmise par le pont B sur l'anneau R2, le port de sortie de l'anneau R2 étant pour l'instant inconnu, il est noté BO). Puis il diffuse la trame sur le réseau R2.

Lorsqu'elle arrive à l'équipement E2, ce dernier met à jour le champ RIF qui prend la valeur R3.B3.R2.B4.RF.BO. Il stocke temporairement la valeur de ce RIF dans une mémoire dite mémoire de contexte, et ouvre des circuits virtuels vers tous les équipements d'interconnexion distants du réseau longue distance afin de leur diffuser la trame, et notamment un circuit virtuel CV vers l'équipement d'interconnexion E1 (on se place ici dans le cas où l'équipement de raccordement de la station destinataire est inconnu de l'équipement E2).

Lorsqu'ils la reçoivent, chacun de ces équipements:
- enregistrent dans sa mémoire de configuration que les anneaux R2 et R3 dépendent de l'équipement d'interconnexion E2 (pratiquement, il enregistrent l'adresse X121 de l'équipement d'interconnexion E2).
- enregistrent dans leur mémoire de contexte, le numéro du circuit virtuel correspondant à cette session,
- mettent à jour le champ RIF en ne conservant que sa partie locale (RF.BF.R1.BO pour l'équipement d'interconnexion E1),
- diffusent la trame.

Lorsque la trame arrive à la station S1, celle-ci y répond en émettant une trame de réponse à destination de la station S3. Le champ AD de cette trame contient l'adresse R3.S3 de la station S3 et son champ AS contient l'adresse R1.S1 de la station S1. Le bit de direction de lecture de son champ RIF est inversé, son champ C indique que cette trame de réponse ne doit pas être diffusée, et ses champs di contiennent la route indiquée dans le champ RIF de la trame reçue, soit RF.BF.R1.BO.

L'équipement d'interconnexion E1 transmet la trame de réponse à l'équipement d'interconnexion E2 par l'intermédiaire du circuit virtuel CV. D'autre part l'équipement d'interconnexion E1 enregistre le contenu du RIF dans la mémoire de contexte, pour le temps de la session. Cela lui permettra de savoir, lorsqu'il recevra une trame de S3 à destination de S1, que la route à utiliser est RF.BF.R1.BO. Cette information doit être distinguée de celle qui sont enregistrées dans la mémoire de configuration, qui le sont soit de manière définitive par le configurateur du système, soit pour une durée limitée qui est largement supérieure à la durée moyenne d'une session entre deux stations.

Cette trame de réponse parvient donc à l'équipement d'interconnexion E2 qui:
- apprend alors que le réseau R1 dépend de l'équipement d'interconnexion E1, et enregistre l'adresse X121 de cet équipement,
- enregistre dans sa mémoire de contexte le numéro du circuit virtuel à utiliser pour cette session,
- vide le champ RIF de la trame et le remplace par celui qu'il avait stocké temporairement c'est-à-dire R3.B3.R2.B4.RF.BO.

La trame ainsi constituée arrive finalement à la station S3 qui mémorise alors que la route à utiliser pour atteindre la station S1 est la route R3.B3.R2.B4.RF.BO contenue dans le champ de la trame qu'elle reçoit. Ainsi lorsque la station S3 veut postérieurement émettre une trame vers la station S1, elle indique la route R3.B3.R2.B4.RF.BO à utiliser pour l'atteindre; et lorsque la trame arrive à l'équipement d'interconnexion E2, celui recherche dans sa mémoire de contexte le numéro du circuit virtuel à utiliser. Lorsque l'équipement E1 reçoit à son tour ladite trame, il recherche dans sa mémoire de contexte la route à utiliser pour atteindre la station S1, c'est-à-dire RF.BF.R1.BO, et il remplit le champ RIF avant de transmettre la trame.

A la fin de chaque session, le contenu de la mémoire de contexte est effacé, de telle sorte qu'au début de chaque nouvelle session, la station source doit diffuser une trame d'exploration pour découvrir la route vers la station destinataire. Si les informations contenues dans la mémoire de configuration, relativement à la destination correspondante, sont toujours en vie, l'équipement d'interconnexion local répond alors directement à la station source sans même transmettre la trame d'exploration à l'équipement d'interconnexion distant.

Il est important de noter que d'après ce mode de fonctionnement, les équipements d'interconnexion du réseau longue distance apprennent les réseaux locaux au lieu d'apprendre les stations indépendamment les unes des autres. Ceci est rendu possible par la structure imposée aux adresses des stations qui permet, a partir de l'adresse de la station destinataire d'une trame, de localiser immédiatement l'anneau sur lequel elle est connectée. Dans les cas où il serait impossible d'imposer une telle structure aux adresses, ce sont les stations qui seraient apprises par les équipements d'interconnexion.

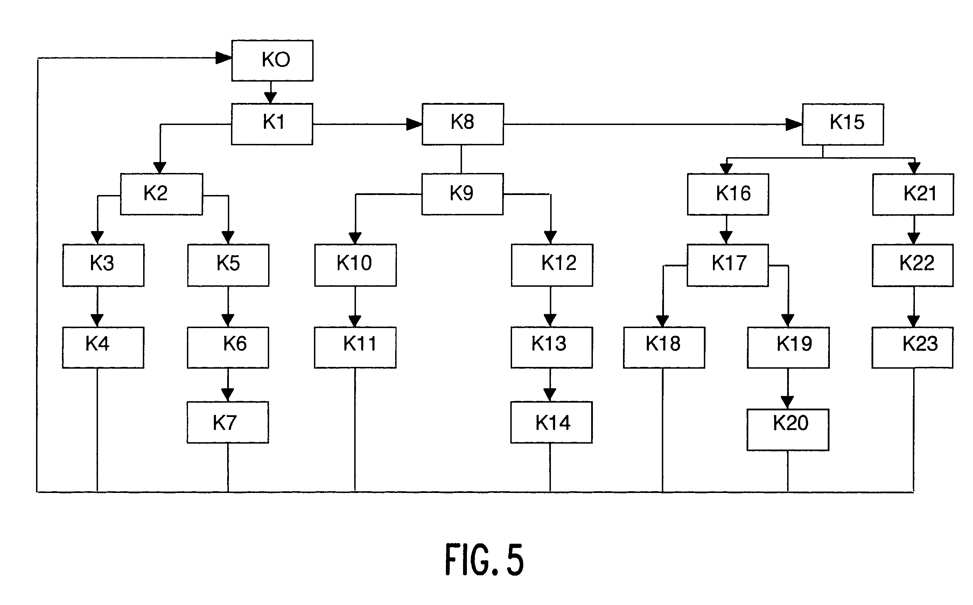

La figure 4 décrit le fonctionnement de l'invention lors d'une communication entre la station S2 et la station S3. Le fait de pouvoir connecter une station directement sur le réseau longue distance impose de mettre en oeuvre des moyens supplémentaires. En effet, les protocoles utilisés par ces deux stations sont différents ce qui leur interdit de communiquer directement entre elles. Il est donc nécessaire de configurer les équipements d'interconnexion du réseau longue distance de telle sorte qu'il puisse répondre directement à une trame d'exploration émise par la station S3. Et pour cela il est également nécessaire d'attribuer une adresse virtuelle à la station S2, de même format que les stations S1 et S3 qui sont connectées de façon classique sur des réseaux locaux (l'adresse réelle de la station étant dans l'exemple décrit ici une adresse X121). Cette adresse virtuelle s'écrit donc RF.S2, où S2 représente un numéro de la station S2 codé sur 2 octets.

Chaque équipement d'interconnexion du réseau longue distance comporte donc une table de correspondance entre l'adresse réelle au format X121 de la station S2 et son adresse virtuelle RF.S2.

Ainsi, lorsque la station S3 émet une trame d'exploration à destination de la station S2, avec comme adresse de destination RF.S2, l'équipement d'interconnexion E2 qui reçoit cette trame recherche dans sa table de correspondance l'adresse X121 de S2, et ouvre un circuit virtuel vers S2. Puis il répond directement à S3 en recopiant le champ de routage de la trame d' exploration qu'il a reçu.

La figure 5 représente un organigramme de fonctionnement d'un tel équipement d'interconnexion. Les différentes cases de cet organigramme sont décrites ci-dessous:
- case KO: l'équipement est en attente de réception d'une trame sur l'un de ses ports. Dès qu'il en reçoit une, il passe à la case K1.
- case K1: l'équipement recherche s'il s'agit ou non d'une trame d'exploration (ce qui est indiqué par le champ de données de la trame de niveau liaison de données, elle-même véhiculée dans le champ données de la trame physique représentée sur la figure 2). S'il s'agit d'une trame d'exploration, il passe à la case K8. Sinon, il s'agit d'une trame de données, et il passe à la case K2.
- case K2: si la trame a été reçue sur un port local de l'équipement (c'est-à-dire sur un port de connexion à un réseau local), il passe à la case K3. Sinon elle a été reçue sur un port distant (c'est-à-dire sur un port de connexion au réseau longue distance) et l'équipement passe à la case K5.
- case K3: l'équipement recherche dans sa mémoire de contexte, a partir du champ AD, le numéro du circuit virtuel à utiliser pour cette session, et passe à la case K4.
- case K4: l'équipement supprime la route contenue dans le champ RIF er transmet la trame reçue sur ledit circuit virtuel. Puis il retourne à la case KO.
- case K5: l'équipement recherche dans sa mémoire de contexte la route à suivre pour cette session (c'est-à-dire la route à utiliser pour atteindre le destinataire de la trame). Puis il passe à la case K6.
- case K6: l'équipement inscrit ladite route dans le champ RIF de la trame, puis il passe à la case K7.
- case K7: l'équipement transmet la trame sur le réseau local indiqué par ladite route. Puis il reprend à la case KO.
- case K8: l'équipement recherche si la trame d'exploration reçue est une trame de demande ou de réponse (ce qui est indiqué par le dernier bit du champ SSAP de la trame de niveau liaison de donnée). S'il s'agit d'une réponse, il passe à la case K9; sinon, il passe à la case K15.
- case K9: si la trame a été reçue sur un port local de l'équipement, il passe à la case K10; sinon, il passe à la case K12.
- case K10: l'équipement enregistre le contenu du champ RIF de la trame dans sa mémoire de contexte et il passe à la case K11.
- case K11: il lit dans sa mémoire de contexte le numéro du circuit virtuel à utiliser pour cette session et transmet la trame sur ce circuit virtuel. Puis il reprend à la case KO.
- case K12: l'équipement enregistre dans sa mémoire de configuration que les réseaux indiqués dans le champ RIF de la trame reçue dépendent de l'équipement distant qui lui a transmis cette trame (c'est-à-dire qu'il enregistre les numéros des réseaux et l'adresse X121 de l'équipement distant de raccordement). Puis il supprime la route indiquée dans le champ RIF et passe à la case K13.
- case K13: il enregistre dans le champ RIF la route qu'il avait stockée provisoirement lors du passage de la trame de demande. Et il enregistre le numéro du circuit virtuel à utiliser pour cette session dans sa mémoire de contexte. Puis il passe à la case K14.
- case K14: l'équipement transmet la trame sur le réseau local indiqué dans le champ RIF. Puis il reprend à la case KO.
- case K15: si la trame a été reçue sur un port local de l'équipement, il passe à la case K16 sinon, il passe à la case K21.
- case K16: il met à jour le champ RIF et le stocke temporairement dans sa mémoire de contexte. Puis il passe à la case K17.
- case K17: il recherche dans sa mémoire de configuration l'équipement distant de raccordement de la station destinataire de la trame. Si elle est connue, il passe à la case K18, sinon à la case K19.
- case K18: l'équipement émet directement une trame d'exploration de réponse vers la station source. Puis il reprend à la case KO.
- case K19: l'équipement ouvre des circuits virtuels vers tous les équipements d'interconnexion configurés puis passe à la case K20.
- case K20: il diffuse la trame sur chacun de ces circuits virtuels avant de reprendre à la case KO.
- case K21: l'équipement enregistre dans sa mémoire de configuration que les réseaux indiqués dans le champ RIF de la trame reçue dépendent de l'équipement distant qui lui a transmis cette trame. Puis il enregistre dans sa mémoire de contexte le numéro du circuit virtuel à utiliser pour cette session avant de passer à la case K22.
- case K22: il vide le champ RIF de la trame reçue et le met à jour de façon à ne conserver que sa partie locale. Puis il passe à la case K23.
- case K23: l'équipement diffuse la trame sur chacun des réseaux locaux qui lui sont connectés. Puis il reprend à la case KO.

Dans le mode de réalisation préférentiel qui vient d'être décrit, la partie de la route située au delà du réseau longue distance est stockée, lors de l'établissement d'une session entre une station source et une station destinataire, dans la mémoire de contexte de l'équipement d'interconnexion de raccordement de la station destinataire. Ainsi, la station destinataire est vue par la station source comme étant directement connectée au réseau longue distance, et il est donc inutile dans ce cas d'enregistrer, dans la mémoire de configuration de l'équipement de raccordement de la station source, la route à suivre pour atteindre la station destinataire.

Dans un mode de réalisation différent, selon lequel les champs RIF doivent véhiculer la route complète, de bout en bout, entre une station source (S3 par exemple) et une station destinataire (S1 par exemple), les équipements d' interconnexion E2 et E1 enregistrent respectivement dans leur mémoire de configuration:
- la route permettant d'atteindre le réseau R1 à partir de l'équipement E2, c'est-à-dire R1.B1.RF.BO,
- les routes permettant d'atteindre les réseaux R2 et R3 à partir de l'équipement E1, c'est-à-dire R2.B4.RF.BO et R3.B3.R2.B4.RF.BO.

Ainsi, lorsque par exemple l'équipement E1 reçoit ultérieurement de la station S1 une trame d'exploration à destination de la station S3, si le réseau R3 est enregistré dans sa mémoire de configuration, il peut répondre directement à la station S1 en lui indiquant la route complète vers R3, soit R1.BF.RF.B4.R2.B3.R3.BO.

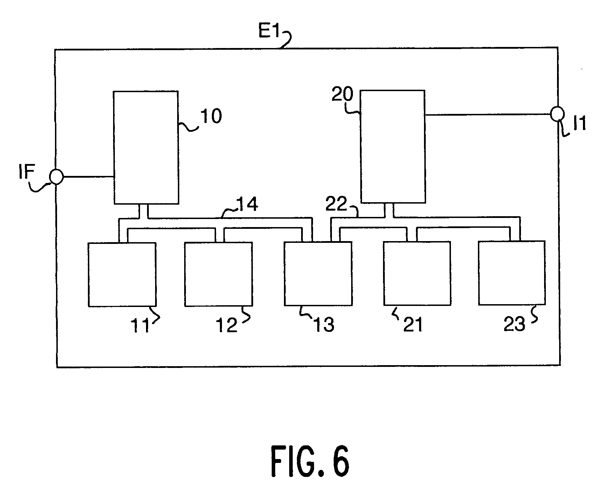

La figure 6 représente schématiquement un équipement d'interconnexion selon l'invention.

D'après la figure 6 un tel équipement E1 comporte une interface réseau étendu IF qui est reliée à un processeur d'applications 10 constitué par exemple par un 68360 de Motorola. Ce processeur 10 est lui-même relié par un bus 14 à une mémoire 11 qui contient notamment la table de correspondance entre les adresses virtuelles et les adresses X121 des stations qui sont directement connectées sur le réseau longue distance, ainsi que les numéros attribués pour le routage à chaque port de t'équipement, l'adresse physique X121 de l'équipement sur le réseau longue distance, le numéro de réseau virtuel attribué au réseau longue distance. Le processeur 10 est également relié par ce bus 14 à une mémoire statique 12 qui contient les instructions de fonctionnement du processeur 10, notamment celles nécessaires à la mise en oeuvre de l'invention conformément à l'organigramme représenté sur la figure 5, et à une mémoire vive 13 contenant des données, et en particulier les mémoires de contexte et de configuration nécessaires à la mise en oeuvre de l'invention. L'équipement d'interconnexion E1 dispose également d'au moins une interface réseau local I1 qui est reliée à un contrôleur de communication 20 qui est par exemple un TROLI (de l'anglais Token Ring Optimization Line Interface) fabriqué par Pulse Technology, lui-même relié par un bus 22 à un processeur de communication 23, constitué par exemple par un TMS380C25 de Texas Instruments, et à une mémoire statique 21 contenant les instructions de fonctionnement du processeur de communication 23, notamment celles nécessaires à la mise en oeuvre de l'invention, et à la mémoire de données 13 précitée. La communication entre les deux processeurs 10 et 23 se fait donc par l'intermédiaire de la mémoire de données 13.

Il va de soi que des modifications peuvent être apportées au mode de réalisation qui vient d'être décrit, notamment par substitution de moyens techniques équivalents, sans que l'on sorte pour cela du domaine de la présente invention.

## Revendications

1. Système d'interconnexion de réseaux locaux utilisant un protocole de routage de type "routage depuis la source", au travers d'un réseau longue distance par l'intermédiaire d'équipements d' interconnexion,
caractérisé en ce que chacun desdits équipements d'interconnexion:
- contient une mémoire, dite mémoire de configuration, destinée à comporter, au moins, pour chaque destination au delà du réseau longue distance, l'adresse sur le réseau longue distance de l'équipement d'interconnexion de raccordement de ladite destination, et comporte:
- des moyens d'apprentissage de ladite adresse,
- des moyens de recherche dans ladite mémoire de la destination des trames reçues,
- et des moyens pour établir, lorsque ladite destination est connue, une connexion vers ledit équipement d'interconnexion de raccordement.

2. Système d'interconnexion selon la revendication 1, caractérisé en ce que la mémoire de configuration de chaque équipement d'interconnexion est également destinée à comporter la route à suivre pour atteindre chacune des dites destinations à partir de cet équipement,
et en ce que lesdits équipements d'interconnexion comportent:
- des moyens de réception d'une trame d'exploration,
- des moyens pour rechercher la destination de cette trame dans la mémoire de configuration,
- et des moyens pour répondre directement à la trame d'exploration en indiquant la route à suivre, lorsque cette destination y figure.

3. Système d'interconnexion selon l'une des revendications 1 ou 2, caractérisé en ce que les adresses des stations desdits réseaux locaux sont structurées de façon à comporter un numéro du réseau, suivi d'un numéro de la station sur ce réseau, et en ce que la destination enregistrée dans ladite mémoire de configuration est le numéro du réseau sur lequel se situe la station de destination.

4. Système d'interconnexion selon la revendication 3, caractérisé en ce que lesdits moyens d'apprentissage consistent pour chaque équipement d'interconnexion à enregistrer, sur réception d'une trame d'exploration, l'adresse de l'équipement d'interconnexion distant qui la lui a transmise avec les numéros des réseaux figurant dans la route suivie par ladite trame.

5. Système d'interconnexion selon l'une des revendications 1 à 4, caractérisé en ce qu'il comporte des moyens pour que la partie de la route située au delà du réseau longue distance soit stockée, lors de l'établissement d'une session entre une station source et une station destinataire, dans une mémoire de l'équipement d'interconnexion de raccordement de ladite station destinataire.

6. Système d'interconnexion selon la revendication 5, caractérisé en ce qu'il comporte des moyens pour supprimer ladite partie de route de la mémoire de l'équipement d'interconnexion de raccordement de la station destinataire à la fin de la session entre lesdites stations.

7. Système d'interconnexion selon l'une des revendications 1 à 6, caractérisé en ce qu'il comporte au moins une station connectée directement sur le réseau longue distance, une adresse virtuelle de même format que celui des stations desdits réseaux locaux étant attribuée à ladite station, et chacun des équipements d' interconnexion du réseau longue distance comportant une table de correspondance entre ladite adresse virtuelle et l'adresse de ladite station sur le réseau longue distance.

8. Equipement d'interconnexion de réseaux caractérisé en ce qu'il comporte des moyens lui permettant d'être utilisé dans un système d'interconnexion de réseaux selon l'une des revendications 1 à 7.
